# EUROPEAN PATENT APPLICATION

(11) **EP 1 726 207 A1**
(43) Date of publication of application: **29.11.2006**
(21) Application number: 06252737.9
(22) Date of filing: 25.05.2006
(51) Int. Cl.: A01K 39/012

(54) **Bird feeder port**

(30) Priority: 27.05.2005 GB 0510851
(71) Applicant: C J Wildbird Foods Limited, Shrewsbury SY4 4UR (GB)
(72) Inventor: Nock, Robert Kenneth, Mellieha MLH 04 (MT)
(74) Representative: Barnfather, Karl Jon

(57) **Abstract**

A bird feeder port (10) having a front face with a feeding aperture (22), a side wall or walls, a rear face (30) and connection means provided to allow the rear face of two identical bird feeder ports to be connected back to back; the connection means comprising a post (32) extending outwardly from the rear face and having a sideways extending engagement portion (34) at the distal end. The rear face has an aperture (40) proximal the post, and an engagement edge (44) integral with the rear face positioned on the inside of this aperture. In use the engagement portion of one port may engage the engagement edge of another identical port.

## Description

The present invention relates to a bird feeder port and in particular to means of connecting two identical feeding ports in a back to back configuration.

Many bird feeders having tubular shaped main bodies arrange feeding ports in pairs in a back to back configuration; for example located in diametrically opposed positions along a cylindrical body. It is normal for such pairs of feeding ports to be held together simply by a nut and bolt. Connecting pairs of ports by this means is somewhat time consuming.

The present invention seeks to provide an improved bird feeder port and in particular ports that can be quickly joined in pairs.

In one aspect the invention comprises a bird feeder port having a front face with a feeding aperture, a side wall or walls, and a rear face; wherein connection means are provided to allow the rear face of two identical bird feeder ports according to the invention to be connected back to back; characterised in that said connection means comprise: a post extending outwardly from said rear face having a sideways extending engagement portion at the distal end; an aperture in the rear face proximal said post; and an engagement edge integral with said rear face said edge being positioned on the inside of said aperture such that in use said engagement portion of one port may engage said engagement edge of an identical port.

Preferably, the said engagement is in a snap fit manner. This may be achieved by at least part of the connection means being made of a resilient material; for example the post may have resilience and so may flex relative to the rear face. Preferably, the feeding port is made of a plastics material.

Preferably, the post has an enlarged male base portion and an aperture that has a corresponding female shape such that the enlarged base portion is a key fit. This advantageously prevents rotation of one port relative to another following connection and thus makes the connection more secure.

An embodiment of the invention will now be described by reference to the following diagrammatic figures in which:

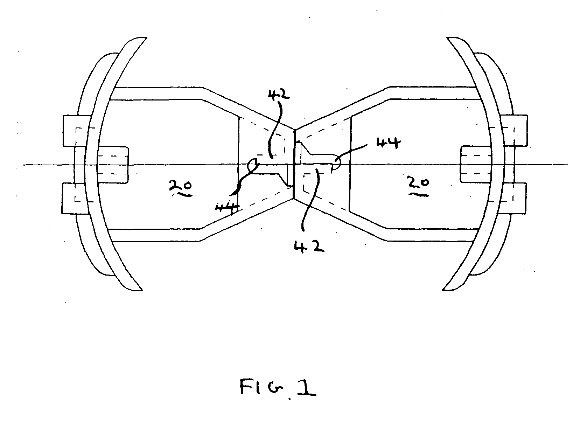

Figure 1 is an underside view of two identical ports according to the invention connected back to back;

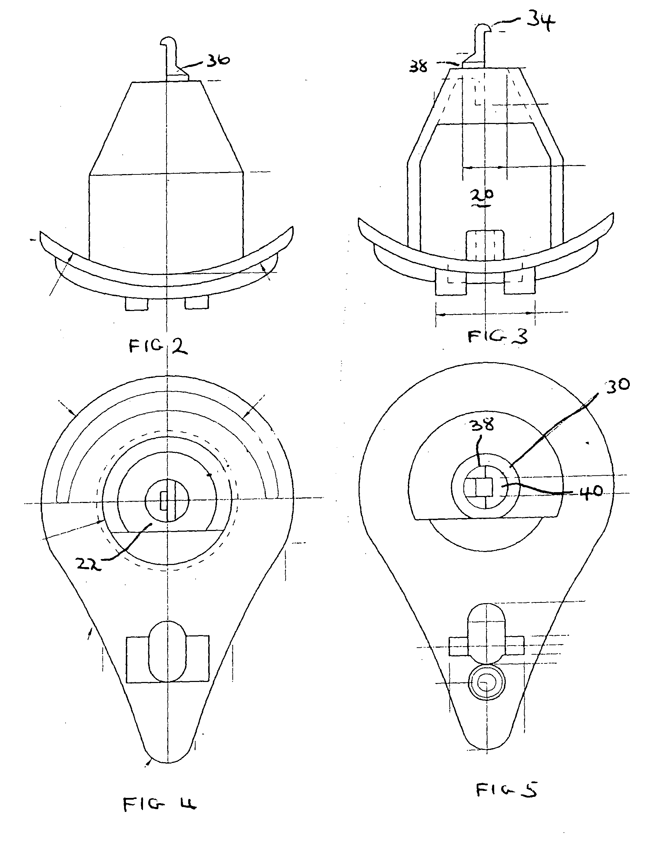

Figure 2 is a plan view of a port according to the invention;

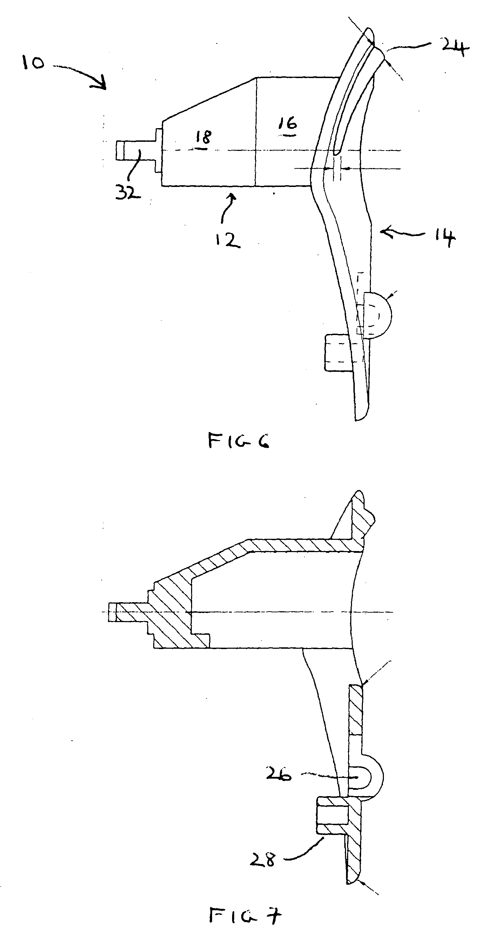

Figure 3 is an underside view of the port shown in Figure 2;
Figure 4 is a front view of the port shown in Figure 2;
Figure 5 is a rear view of the port shown in Figure 2
Figure 6 is a side view of the port shown in Figure 2; and
Figure 7 is a cross section view corresponding to Figure 6.

The port 10 comprises a feed distributor 12 and a flange 14. Feed distributor 12 comprises a truncated cylindrical portion 16 and a truncated frustroconical portion 18. Portions 16 and 18 are truncated below their lower half so that, in use, seed may enter the port 10 via the orifice 20 formed by these truncations.

Flange 14 presents a circular orifice 22 via which, in use, a bird may access seed with its beak from the bird feeder. The upper portion of flange 14 has a hood 24 that is positioned so that in use it shields the aperture against rainfall and thus helps keep birdseed dry. The lower portion of flange 14 has a U-shaped recess 26 in each side. These recesses provide pivot means for a perch assembly (not shown). The rear face of flange 14 has a protruding notch 28 that, in use, locates a hole in the main body of the bird feeder.

Frustroconical portion 18 has a rear face 30 which has a post 32 extending outwardly therefrom; the distal end of the post from the face 30 has a sideways protruding engagement portion 34 such that the post and the engagement member together resemble a hook. Post 32 has a semi circular cross section. The post 32 has a base comprising a truncated frustroconical portion 36 and a semicircular key fit portion 38. Adjacent to the base portion 36 is a semi circular aperture 40 located in the rear face 30. Protruding inwardly from the rear face is a holding member 42 integrally formed with the rear face. The holding member extends inwardly within the frustro conical portion 18 of the port 10 and presents an engagement edge 44 at the end distal from the rear face 30.

In use, two identical feeding ports can be attached back to back, without the need for a bolt or the like, merely by aligning the semicircular key fit portion 38 of a first port with the semicircular aperture 40 of a second port and pushing the rear faces 30 of the ports towards each other so that the rear faces of each port are coincident. This results in the hook portion of one port 32, 34 engaging the engagement edge 44 of the other port. In this position the two ports are locked together. Such locking would normally take place after the feed distributor portion 12 of each port had been inserted through the external hole of a bird feeder body; typically a tubular bird feeder body where the holes are opposite each other or diametrically located.

Preferably, the feeding port is made of a plastics material. Preferably, the feed distributor 12 and flange 14 are integral; for example a single component produced by moulding plastics material.

## Claims

1. A bird feeder port comprising a front face with a feeding aperture, and a rear face; wherein connection means are provided to allow the rear face of two identical bird feeder ports according to the invention to be connected back to back; **characterised in that** said connection means comprise: a post extending outwardly from said rear face having an engagement portion.

2. A port according to Claim 1 wherein the engagement portion extends sideways from the distal end of the post.

3. A port according to any preceding claim comprising an aperture in the rear face proximal said post; and an engagement edge integral with said rear face said engagement edge being positioned on the inside of said aperture such that in use said engagement portion of one port may engage said engagement edge of an identical port.

4. A port according to Claim 3 wherein the post has an enlarged male base portion and an aperture that has a corresponding female shape such that the enlarged base portion is a key fit.

5. A port according to any preceding claim wherein said engagement is in a snap fit manner.

6. A port according to any preceding claim wherein the post has resilience and so may flex relative to the rear face.

7. A port according to any preceding claim made of plastics material.
